# EUROPÄISCHE PATENTANMELDUNG

(11) **EP 1 231 694 A1**
(43) Veröffentlichungstag der Anmeldung: **14.08.2002**
(21) Anmeldenummer: 01128001.3
(22) Anmeldetag: 24.11.2001
(51) Int. Cl.: H02G 3/30, H02G 3/12

(54) **Konsole für eine Montageschiene**

(30) Priorität: 10.02.2001 DE 20102391 U
(71) Anmelder: fischerwerke Artur Fischer GmbH & Co. KG, 72178 Waldachtal (DE)
(72) Erfinder: Neumar, Gunter, 72285 Pfalzgrafenweiler (DE)

(57) **Zusammenfassung**

Die Erfindung betrifft eine Konsole (10) zur Befestigung einer Montageschiene (20) an beispielsweise einer nicht dargestellten Wand. Die Erfindung schlägt vor, die Konsole (10) teleskopierbar mit einem Teleskopierelement (16) auszubilden, der ebenso wie die Montageschiene (20) als Vierkant-Rohr mit durchgehendem Längsschlitz (18, 22) ausgebildet ist. Die Erfindung hat den Vorteil eines Längenausgleichs bei der Befestigung der Montageschiene (20) an beispielsweise einer Wand.

## Beschreibung

Die Erfindung betrifft eine Konsole für eine Montageschiene mit den Merkmalen des Oberbegriffs des Anspruchs 1. Die Konsole ist zur Befestigung der Montageschiene an beispielsweise einer Wand oder einem Pfosten vorgesehen.

Montageschienen der in Rede stehenden Art sind bekannt. Sie sind üblicherweise als Rechteck-Rohrprofile mit einem durchgehenden Längsschlitz auf einer Seite und einer Lochreihe auf einer gegenüberliegenden Seite ausgebildet. Die Montageschienen werden mit Abstand parallel zueinander beispielsweise an einer Decke oder abgehängt unter einer Decke befestigt und dienen zur Montage von beispielsweise Rohrleitungen, Kabeln oder auch Lauf- und Trittrosten. Die Montage kann stehend, d.h. auf oder über der (abgehängten) Montageschiene oder hängend unter der Montageschiene erfolgen. Zur Montage werden vielfach Hammerkopfelemente in den Längsschlitz der Montageschiene eingesetzt und durch eine Vierteldrehung in Hintergriff mit Wandungen der Montageschiene seitlich des Längsschlitzes gebracht. Mit einer von außen gegengeschraubten Mutter werden die Hammerkopfelemente festgeklemmt und es können Bauelemente wie die genannten Rohrleitungen, Kabel, Tritt- und Laufroste an den Hammerkopfelementen befestigt werden.

Soll eine Montageschiene in einem Zwischenraum beispielsweise zwischen zwei Wänden, einer Wand und einem Pfosten oder zwei Pfosten befestigt werden, muss sie entweder an der Decke befestigt oder aber zur Befestigung an den Wänden und/oder Pfosten exakt auf die Größe des Zwischenraums abgelängt werden.

Der Erfindung liegt daher die Aufgabe zugrunde, eine Konsole zur Befestigung einer Montageschiene in einem Zwischenraum vorzuschlagen, die ein genaues Ablängen der Montageschiene entbehrlich macht.

Diese Aufgabe wird erfindungsgemäß durch die Merkmale des Anspruchs 1 gelöst. Die erfindungsgemäße Konsole mit den Merkmalen des Anspruchs 1 weist ein Teleskopierelement auf, das nach Art eines Teleskopauszugs in ein Ende der Montageschiene einschiebbar ist. Das Teleskopierelement der erfindungsgemäßen Konsole weist eine mit der Montageschiene übereinstimmende oder zumindest im Wesentlichen übereinstimmende Querschnittsform auf. Ist die Montageschiene als Vierkant-Rohrprofil mit durchgehendem Längsschlitz ausgebildet, weist auch das Teleskopierelement diese Querschnittsform auf. Allerdings ist das Teleskopierelement um eine Wandstärke der Montageschiene kleiner als diese, so dass Außenabmessungen des Teleskopierelements der Konsole Innenabmessungen der Montageschiene entsprechen und das Teleskopierelement nach Art eines Teleskopauszugs in ein Ende der Montageschiene einschiebbar ist. Die Montageschiene ist fluchtend und in Längsrichtung verschieblich auf dem Teleskopierelement gehalten. Durch die Verschiebbarkeit ist ein Längenausgleich zur Anpassung an die Größe des Zwischenraums, in dem die Montageschiene befestigt werden soll, möglich. Zur Befestigung der Montageschiene in einem Zwischenraum beispielsweise zwischen Wänden und/oder Pfosten wird die Montageschiene so abgelängt, dass sie kürzer als der Zwischenraum ist. Es werden zwei Konsolen in die beiden Enden der Montageschiene gesteckt und an den Wänden/Pfosten befestigt, beispielsweise angeschraubt. Abschließend wird die Montageschiene beispielsweise mittels eines Hammerkopfelements an zumindest einer der beiden Konsolen festgeklemmt, um die Montageschiene unverschieblich zu fixieren. Dabei kann das zum Klemmen verwendete Hammerkopfelement zugleich auch zur Befestigung eines an der Montageschiene zu befestigenden Gegenstandes dienen.

Die Erfindung hat zunächst den Vorteil, dass ein genaues Ablängen der Montageschiene auf die Größe des Zwischenraums, in dem die Montageschiene befestigt werden soll, nicht notwendig ist. Die Montageschiene kann mit einem Untermaß von beispielsweise einigen Zentimetern abgelängt werden. Dies vereinfacht den Aufwand für das Ablängen. Weiterer Vorteil der Erfindung ist, dass die Konsole die Montageschiene ohne Festklemmen oder Verschrauben der Montageschiene an der Konsole stabil und sicher gegen Abheben sowie fluchtend mit dem Teleskopierelement der Konsole hält. Ein Festklemmen der Montageschiene am Teleskopierelement der Konsole zur Sicherung gegen Verschieben ist beispielsweise mit einem Hammerkopfelement möglich, das zur Befestigung eines an der Montageschiene zu befestigenden Gegenstandes ohnehin benötigt wird, so dass in diesem Fall kein separates Klemmelement notwendig ist. Weiterer Vorteil der Erfindung ist, dass eine Befestigung eines zu befestigenden Gegenstandes auch im Bereich des Teleskopierelements und bis unmittelbar an eine den Zwischenraum begrenzende Wand oder einen den Zwischenraum begrenzenden Pfosten möglich ist.

Der nebengeordnete Anspruch 2 ist darauf gerichtet, dass Innenabmessungen des Teleskopierelements der erfindungsgemäßen Konsole Außenabmessungen der Montageschiene entsprechen. Das Teleskopierelement ist in diesem Fall also um eine Wandstärke der Montageschiene größer als die Montageschiene, das Teleskopierelement wird nach Art eines Teleskopauszugs die Montageschiene am Außenumfang umgreifend auf deren Ende aufgesteckt anstatt in das Ende der Montageschiene eingesteckt. Konstruktiv und funktionell sind diese beiden Lösungen gleichwertig.

Eine Querschnittsform des Teleskopierelements der erfindungsgemäßen Konsole entspricht einer Querschnittsform der mit der Konsole zu befestigenden Montageschiene. Vorzugsweise weist das Teleskopierelement der erfindungsgemäßen Konsole ein Rohrprofil mit einem durchgehenden Längsschlitz auf. Insbesondere ist das Rohrprofil des Teleskopierelements ein Mehrkant-Rohrprofil, vorzugsweise ein Vierkant-Rohrprofil.

Die Erfindung wird nachfolgend anhand eines in der Zeichnung dargestellten Ausführungsbeispiels näher erläutert. Die einzige Figur zeigt eine erfindungsgemäße Konsole mit aufgesteckter Montageschiene in perspektivischer Darstellung.

Die in der Zeichnung dargestellte, erfindungsgemäße Konsole 10 weist eine Grundplatte 12 auf, die mit zwei Durchstecklöchern (Langlöchern) 14 zum Anschrauben der Konsole 10 an beispielsweise einer nicht dargestellten Wand oder einem nicht dargestellten Pfosten dienen. Die Grundplatte 12 mit den Durchstecklöchern 14 bildet eine Befestigungseinrichtung der Konsole 10. Von der Grundplatte 12 steht rechtwinklig ein Vierkantrohr 16 ab, das einen durchgehenden Längsschlitz 18 aufweist. Das Vierkantrohr 16 ist mit der Grundplatte 12 verschweißt. Das Vierkantrohr 16 bildet ein Teleskopierelement 16 der Konsole 10 und wird nachfolgend als solches bezeichnet.

Auf das Teleskopierelement 16 ist eine Montageschiene 20 aufgeschoben, die nach Art einer Teleskopführung auf dem Teleskopierelement 16 der Konsole 10 verschiebbar ist. Die Montageschiene 20 ist wie das Teleskopierelement 16 als Vierkant-Rohrprofil mit einem durchgehenden Längsschlitz 22 ausgebildet. Eine Querschnittsform der Montageschiene 20 stimmt mit einer Querschnittsform des Teleskopierelements 16 überein, allerdings ist ein Querschnitt der Montageschiene 20 um eine Wandstärke der Montageschiene 20 größer als das Teleskopierelement 16 der Konsole 10, so dass die Montageschiene 20 in Längsrichtung verschiebbar auf das Teleskopierelement 16 aufschiebbar ist. Das Teleskopierelement 16 der Konsole 10 führt die Montageschiene 20 fluchtend und in Längsrichtung verschieblich.

Zur Befestigung der Montageschiene 20 in einem Zwischenraum zwischen beispielsweise zwei Wänden, einer Wand und einem Pfosten oder zwei Pfosten (nicht dargestellt) wird die Montageschiene 20 um einige Zentimeter kürzer als der Zwischenraum abgelängt und es werden zwei Konsolen 10 mit ihren Teleskopierelementen 16 in die Enden der Montageschiene 20 gesteckt. Die Konsolen 10 werden an den Wänden und/oder Pfosten angeschraubt, wobei eine Längenanpassung an die Größe des Zwischenraums selbsttätig durch Verschieben der Teleskopierelemente 16 der beiden Konsolen 10 in den Enden der Montageschienen 20 erfolgt. Die Montageschiene 20 wird so auf das Teleskopierelement 16 aufgeschoben, dass sich die Längsschlitze 22, 18 der Montageschiene 20 und des Teleskopierelements 16 auf derselben Seite befinden und dadurch deckungsgleich sind.

Es können nun in an sich bekannter Weise zu befestigende Gegenstände an der Montageschiene 20 befestigt werden. Die Befestigung kann auch im Endbereich der Montageschiene 20 erfolgen, in den das Teleskopierelement 16 eingesteckt ist. Auch kann die Befestigung außerhalb des Endes der Montageschiene 20 in einem aus der Montageschiene 20 vorstehenden Bereich des Teleskopierelements 16 erfolgen, sofern das Teleskopierelement 16 weit genug aus der Montageschiene 20 vorsteht. Durch die erfindungsgemäße Konsole 10 ist es also möglich, zu befestigende Gegenstände an jeder beliebigen Stelle der Montageschiene 20 und auch über deren Ende hinaus am Teleskopierelement 16 der Konsole 10 zu befestigen. Die Befestigung ist also in Längsrichtung der Montageschiene 20 gesehen an jeder Stelle des Zwischenraums möglich, in dem die Montageschiene 20 mit den Konsolen 10 befestigt ist.

Die Befestigung von Gegenständen an der Montageschiene 20 erfolgt wie in der Zeichnung beispielhaft dargestellt insbesondere mit an sich bekannten, sog. Hammerkopfelementen. Diese Hammerkopfelemente werden in Längsrichtung ausgerichtet durch den Längsschlitz 22, 16 eingeführt und durch eine Vierteldrehung quer zur Montageschiene 20 ausgerichtet. In der Querstellung hintergreifen die Hammerkopfelemente Wandabschnitte der Montageschiene 20 bzw. des Teleskopierelements 16 seitlich des Längsschlitzes 22, 18. Da die Hammerkopfelemente sich in der Montageschiene bzw. im Teleskopierelement 16 befinden, sind sie in der Zeichnung nicht sichtbar. Sichtbar ist in der Zeichnung lediglich ein Gewindeschaft 24 der Hammerkopfelemente, der entweder in das Hammerkopfelement eingeschraubt oder mit dem Hammerkopfelement einstückig ist.

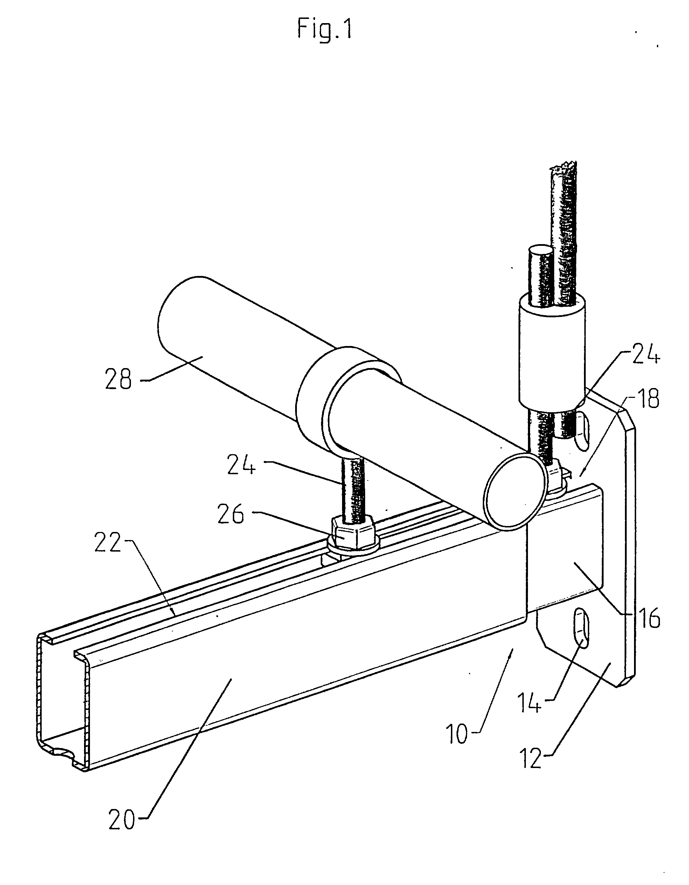

Auf den Gewindeschaft 24 wird eine Klemmmutter 26 aufgeschraubt und von außen gegen die Montageschiene 20 bzw. das Teleskopierelement 16 festgespannt. Wie in Figur 1 sichtbar, ist es ohne weiteres möglich, einen Gegenstand wie beispielsweise ein Rohr 28 im Endbereich der Montageschiene 20 zu befestigen, in den das Teleskopierelement 16 der Konsole 10 eingeschoben ist. Das dazu verwendete Hammerkopfelement klemmt zugleich die Montageschiene 20 am Teleskopierelement 16 fest und fixiert dadurch die Montageschiene 20 an der Konsole 10 gegen Verschieben. Ist an dieser Stelle keine Befestigung vorgesehen, wird zumindest an einer Konsole 10 die Montageschiene 20 insbesondere mit einem Hammerkopfelement und einer von außen gegengespannten Klemmmutter oder einer Klemmschraube unverschieblich auf dem Teleskopierelement 16 festgeklemmt.

In Figur 1 ist rechts die Befestigung eines Gegenstandes außerhalb der Montageschiene 20 in einem aus der Montageschiene 20 vorstehenden Abschnitt des Teleskopierelements 16 angedeutet. Eine Befestigung kann dadurch bis unmittelbar an einer Wand oder einem Pfosten erfolgen, an dem die Konsole 10 angeschraubt ist.

## Patentansprüche

1. Konsole für eine Montageschiene, mit einer Befestigungseinrichtung zum Befestigen der Konsole an einem Bauwerkselement, **dadurch gekennzeichnet, dass** die Konsole (10) ein Teleskopierelement (16) aufweist, dessen Querschnittsform mit einer Querschnittsform der Montageschiene (20) zumindest näherungsweise übereinstimmt und dessen Außenquerschnitt komplementär zu einem Innenquerschnitt der Montageschiene (20) ist, so dass das Teleskopierelement (16) in ein Ende der Montageschiene (20) einschiebbar ist.

2. Konsole für eine Montageschiene, mit einer Befestigungseinrichtung zum Befestigen der Konsole an einem Bauwerkselement, **dadurch gekennzeichnet, dass** die Konsole (10) ein Teleskopierelement (16) aufweist, dessen Querschnittsform mit einer Querschnittsform der Montageschiene (20) zumindest näherungsweise übereinstimmt und dessen Innenquerschnitt komplementär zu einem Außenquerschnitt der Montageschiene (20) ist, so dass das Teleskopierelement (16) auf ein Ende der Montageschiene (20) aufschiebbar ist.

3. Konsole nach Anspruch 1 oder 2, **dadurch gekennzeichnet, dass** das Teleskopierelement (16) ein Rohrprofil mit einem durchgehenden Längsschlitz (18) aufweist.

4. Konsole nach Anspruch 3, **dadurch gekennzeichnet, dass** das Teleskopierelement (16) ein Mehrkant-Rohrprofil aufweist.

5. Konsole nach Anspruch 4, **dadurch gekennzeichnet, dass** das Teleskopierelement (16) ein Vierkant-Rohrprofil aufweist.
